# EUROPÄISCHE PATENTSCHRIFT

(11) **EP 1 779 916 B1**
(45) Veröffentlichungstag und Bekanntmachung des Hinweises auf die Patenterteilung: **24.02.2010**
(21) Anmeldenummer: 06122915.9
(22) Anmeldetag: 25.10.2006
(51) Int. Cl.: B01D 46/10

(54) **Extrudierte Dichtung**
Extruded seal
Joint extrudé

(30) Priorität: 26.10.2005 DE 102005051503
(43) Veröffentlichungstag der Anmeldung: 02.05.2007
(73) Patentinhaber: MANN+HUMMEL GmbH, 71638 Ludwigsburg (DE)
(72) Erfinder: Walz, Stefan, 71634 Ludwigsburg (DE)

(56) Entgegenhaltungen:
- EP-A- 1 369 162
- EP-A- 1 380 334
- EP-A- 1 464 372
- DE-A1- 19 933 205
- JP-A- 10 263 348

## Beschreibung

### Technisches Gebiet

Die Erfindung betrifft ein Filterelement nach dem Oberbegriff des Anspruches 1 sowie ein Verfahren nach dem Oberbegriff des Anspruches 8. Insbesondere in der Automobilindustrie werden Filterelemente für die Ansaugluft der Brennkraftmaschine bzw. für die Filtrierung der dem Innenraum zugeführte Luft angewendet. Solche Filterelemente besitzen zur Abdichtung zwischen der Rohluft- und der Reinluftseite PUR-Polyester- oder PUR-Polyether-Schaumdichtungen. Ein Nachteil solcher Schaumdichtungen kann darin bestehen, dass diese Feuchtigkeit aufnehmen und sich Ablagerungen an den Dichtungen bilden. Ferner können solche aufgeklebten Dichtungen beim Einbau in die dafür vorgesehenen komplexen Filtergehäuse abgeschert werden und damit die geforderten Dichtungsansprüche nicht mehr erfüllen.

### Stand der Technik

Es ist beispielsweise aus der DE-OS 26 20 148 ein Filterelement bekannt, das aus gewellten Papierfilterbahnen aufgebaut ist und an seinen Seiten Stirnflächen mit Seitenstreifen umgeben ist, die mit einem Klebstoff an die Filterbahnen angeklebt sind. Diese Seitenstreifen sind aus einem vorgeformten, aufgeschäumten Kunststoff hergestellt und dienen der Abdichtung des Filterelementes gegenüber der Halterung des Filterelementes.

Um das Herstellverfahren zu vereinfachen, ist außerdem aus der DE 197 37 700 A1 bekannt, dass die Seitenstreifen, ebenso wie die Filterbahnen, aus einer Papierbahn hergestellt und zusätzlich mit einer Klebeschicht versehen sind. Sofern auf der Klebeschicht mindestens ein reißfester Faden oder ein entsprechendes Band angeordnet ist, kann eine ausreichende Festigkeit des Seitenstreifens erreicht werden.

Aus der EPA 1464372 ist ein Filterelement zu entnehmen, bei welchem Dichtungen verwendet werden, die thermoplastisch aus polymerem Material bestehen und im erweichten d.h. im heißen Zustand auf den Filterkörper aufgebracht werden. Solche, im Spritzgussverfahren hergestellte Dichtungen erfordern jedoch zunächst die getrennte Herstellung der Dichtung und anschließend das zusätzliche Erwärmen und Einbringen der Dichtung im Dichtbereich des Filterelements.

Die US 3025963 beschreibt ein Verfahren zur Herstellung von Filterelementen bei welchem im Bereich, in welchem die Filterelemente getrennt werden Leimraupen aufgebracht werden, die für das Verbinden der einzelnen Lagen eines aufgerollten Filters sorgen.

Der Erfindung liegt die Aufgabe zugrunde, ein Filterelement der eingangs genannten Art mit einfachen Mitteln herzustellen, welches eine geringe Anfälligkeit gegen Feuchtigkeit und Ablagerungen aufweist und die geforderten Dichtungsansprüche sowie die geforderte hohe Festigkeit erfüllt.

Diese Aufgabe wird durch die Merkmale des Anspruches 1 gelöst.

Die Erfindung liegt in einem Extrusionsverfahren zur Herstellung eines Filterelements, bei dem zwischen dem Extrusionskopf und dem Filterelement auf dem die Dichtung aufgetragen wird, eine Relativbewegung stattfindet. Der Anstellwinkel des Extrusionskopfes zu dem Filterelement ist dabei so gewählt, dass das ausströmende Dichtungsmaterial nicht nur auf das Filtermedium aufgelegt, sondern in das Filtermedium hineinextrudiert wird.

In einer Ausgestaltung des Verfahrens kann die Dichtung im Robotic- Extrusion-Verfahren, wie es z.B. in der DE 69200618 beschrieben ist, auf das Filtermedium aufgebracht werden. Dabei ist der Extrusionskopf an einem Roboter angeordnet, der nach einer bestimmten Bahn automatisch über die Oberfläche des Gegenstands geführt wird, wobei das Dichtungsmaterial auf dem Weg zum Extrusionskopf erhitzt wird.

Selbstverständlich besteht auch die Möglichkeit, im Spritzgieß- oder Gießverfahren die Dichtung aufzutragen. Gerade die Verwendung des Extrusionsverfahrens erlaubt es, sehr hohe Geschwindigkeiten bei der Aufbringung der Dichtung zu erzielen, da der Extrusionskopf mit sehr hoher Geschwindigkeit an einem Filtermedium, bzw. dem vorgefertigten Filterelement entlang geführt wird. Dies kann dazu genutzt werden, dass mehrere Filterelemente zunächst im Endlos-Verfahren hergestellt werden, d.h. die Filterelemente sind miteinander verbunden und bilden einen endlosen Strang. An diesen Filterelementen wird zunächst an beiden Seiten die Dichtung im Extrusionsverfahren ebenfalls endlos aufgebracht. Anschließend werden die Filterelemente vereinzelt und um 90 ° geschwenkt, so dass in einem zweiten Verfahrensschritt die beiden jeweils verbleibenden Seiten mit Dichtungen ausgestattet werden.

Eine weitere Ausgestaltung der Erfindung sieht vor, beim Auftragen der Dichtung weitere Bauteile an dem Filterelement anzuordnen, so können Bauteile in die Dichtung integriert werden, wie z.B. Befestigungsstrukturen oder Handlingvorrichtungen.

Das extrudierte Dichtungselement kann beispielsweise lippenartig gestaltet sein, es besteht auch die Möglichkeit, eine Dichtung zu extrudieren, die einen Hohlraum aufweist, beispielsweise ein Profil ähnlich einer O- oder einer 'Ω - Form zeigt. Es besteht durch das Extrusions- Verfahren auch die Möglichkeit, das Dichtungselement auf Seitenteile, die einen Radius beschreiben, zu fixieren oder das Dichtungselement durchgehend über Ecken eines Filterelements zu extrudieren.

Die Oberfläche des Dichtungselements kann gleitfähig ausgestattet werden, hierzu ist eine entsprechende Werkstoffauswahl zu treffen. Sofern das Dichtungselement lippenförmig gestaltet ist, besitzt die Dichtlippe eine einheitliche Wandstärke oder läuft verjüngend oder spitz zu. Eine extrudierte Dichtung kann ohne weiteres bedruckt oder geprägt werden um das Produkt zu kennzeichnen.

### Kurze Beschreibung der Zeichnungen

Ein Ausführungsbeispiel der Erfindung wird nachfolgend anhand von Zeichnungen dargestellt.

Es zeigt:

Fig. 1 in einer schematischen Darstellung der Herstellprozess eines Filterelements mit extrudierter Dichtung,

Fig. 2 in einer Draufsicht weitere Verfahrensschritte zur Aufbringung der Dichtung im Extrusionsverfahren,

Fig. 3 eine extrudierte Dichtung in einer Schnittdarstellung.

### Ausführungsform(en) der Erfindung

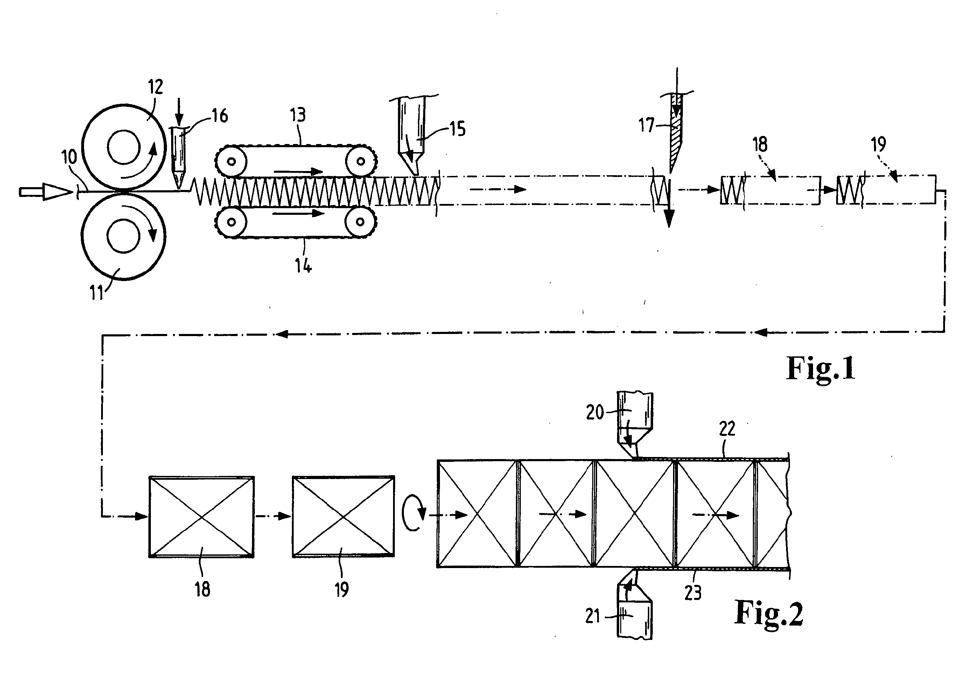

Fig. 1 zeigt ein Filtermedium 10 das in Form einer Bahn zwei Prägewalzen 11, 12 zugeführt wird. In diesem Bereich werden Knickkanten in das Filtermedium eingeprägt, anschließend erfolgt eine Aufstellung des Filtermediums zu einem zick- zack- förmig gefalteten Filterelement, das zwischen zwei Zahnriemen 13, 14 geführt wird und sich jeweils einem auf beiden Seiten der Filterbahn angeordneten Extrusionskopf 15 nähert. Mit einem Leimauftragskopf 16 wird nach dem Prägen an beiden Stirnseiten des Filtermediums je eine Leimraupe aufgetragen, die beim anschließenden Falten zu einem seitlich dichten Verkleben der Falte führt. Mit den Extrusionsköpfen 15 auf beiden Seiten der Filterbahn werden im Oberkantenbereich der Filterbahn Dichtungsstränge aufgetragen die unmittelbar nach dem Auftragen auskühlen und ihre elastischen Eigenschaften entfalten.

Der nächste Verfahrensschritt ist ein Vereinzeln der Filterelemente, hierzu ist eine Trennvorrichtung 17 vorgesehen, die beim Schneidevorgang die Filterelemente 18, 19 auf die geforderte Länge schneiden. Diese Filterelemente 18, 19 werden, wie in Fig. 2 gezeigt, um 90 ° gedreht weitergeführt. Damit durchlaufen sie in einem weiteren Verfahrensabschnitt einen weiteren Fertigungsschritt, nämlich das Auftragen der extrudierten Dichtung auf die verbleibenden weiteren Stirnseiten. Die beiden Dichtungen 22, 23 werden über Extrusionsköpfe 20, 21 aufgetragen. Nach dem Auftragen und Aushärten werden die Dichtungsstränge an den Übergängen zwischen den einzelnen Filterelementen aufgeschnitten und das Filterelement ist vollständig mit einem Dichtungsrahmen versehen.

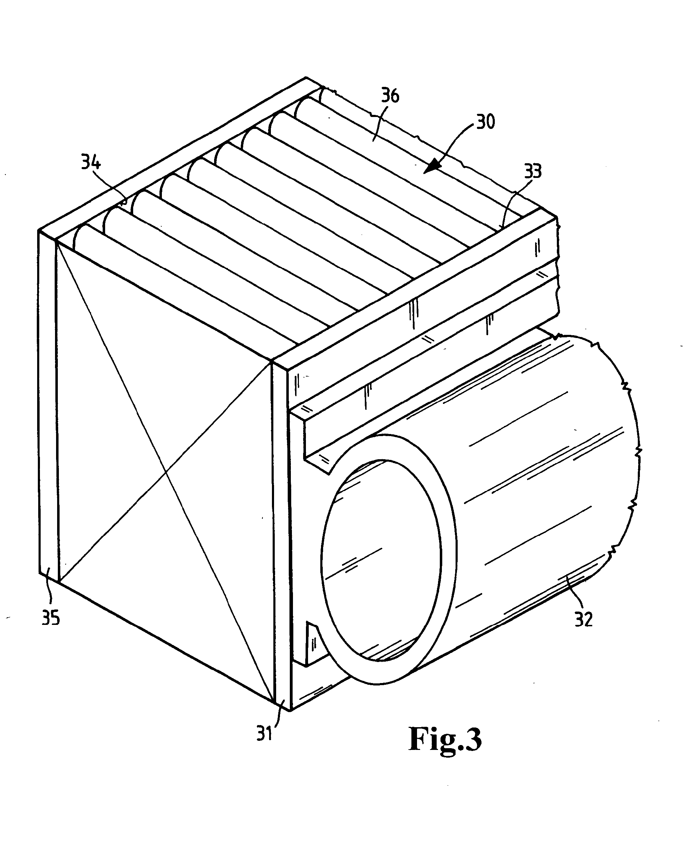

Fig. 3 zeigt in einer Detaildarstellung ein Filterelement 30 in einer angedeuteten dreidimensionalen Schnittdarstellung. Dieses ist zick- zack- förmig gefaltet. An der Oberkante des Filterelements sind die oberen Faltkanten 36 zu sehen. An den beiden Stirnseiten 33, 34 sind Seitenbänder 31, 35 aufgeklebt. An der rechtsseitigen Stirnseite 33 ist eine aufextrudierte Dichtung 32 zu erkennen. Diese Dichtung hat die Form eines 'Ω und ist innen hohl gestaltet, damit weist sie eine hohe Elastizität auf und kann auch hohe Fertigungstoleranzen überbrücken. Auf der linken Seite des Filterelements ist keine Dichtung dargestellt. Selbstverständlich besteht auch hier die Möglichkeit, eine solche Dichtung anzuordnen.

## Patentansprüche

1. Verfahren zum Herstellen eines Filterelementes mit einem Filtermedium, aus faserhaltigem Werkstoff, das in Form einer Bahn zwei Prägebalken (11, 12) zugeführt wird und Knickkanten in das Filtermedium eingeprägt werden, anschließend eine Aufstellung des Filtermediums zu einem zickzackförmig gefalteten Filterelement erfolgt das zwischen zwei Zahnriemen (13, 14) geführt wird und sich jeweils einem, auf beiden Seiten der Filterbahn angeordneten Extrusionskopf (15) nähert, wobei mit einem Leimauftragskopf (16) nach dem Prägen an beiden Stirnseiten des Filtermediums je eine Leimraupe aufgetragen wird, die beim anschließenden Falten zu einem seitlich dichten Verkleben der Falte führt und wobei mit den Extrusionsköpfen (15) auf beiden Seiten der Filterbahn im oberen Kantenbereich der Filterbahn Dichtungsstränge unmittelbar auf das Filtermedium aufgetragen werden, die unmittelbar nach dem Auftragen auskühlen und ihre elastischen Eigenschaften entfalten, wobei die Verbindung zwischen dem Filtermedium und der Dichtung eine Haftkraft aufweist, die eine Zugbelastung größer 1 N/mm² standhält, wobei die Dichtung zur Trennung der Filteranströmseite zu der Filterabströmseite dient.

2. Verfahren nach Anspruch 1, **dadurch gekennzeichnet, dass** zum Auftragen der Dichtung mehrere Filterelemente zunächst im Endlosverfahren hergestellt werden, anschließend die Dichtung auf diese Elemente aufgetragen wird und anschließend eine Vereinzelung dieser Elemente erfolgt.

3. Verfahren nach Anspruch 1, **dadurch gekennzeichnet, dass** bei dem Auftragen der Dichtung weitere Bauteile in die Dichtung integriert werden können.

## Claims

1. Method for manufacturing a filter element with a filter medium made of fiber-containing material which is fed in the form of a belt to two embossing bars (11, 12); bending edges are embossed into the filter medium, followed by the transformation of the filter medium to a fanfold filter element which is guided between two toothed belts (13, 14) and which approaches an extrusion head (15) disposed on both sides of the filter belt, one glue fillet each being applied after the embossing process on both front sides of the filter medium by means of a glue application head, the glue fillet ensuring a laterally tight gluing of the pleats during the pleating process, and sealing fillets being applied directly to the filter medium on both sides of the filter belt in the upper edge section of the filter belt by means of the extrusion heads (15), and these sealing fillets cool down immediately after their application and develop their elastic properties, the connection between the filter medium and the sealing featuring an adhesive force which resists to a tensile load larger than 1 N/mm², the sealing separating the filter onflow side from the filter off-flow side.

2. Method according to claim 1, **characterized in that** for applying the sealing several filter elements have to be manufactured in a continuous process, that the sealing is then applied to these elements and that finally these elements are separated.

3. Method according to claim 1, **characterized in that** during the application of the sealing further components can be integrated into the sealing.

## Revendications

1. Procédé de fabrication d'un élément filtrant avec un milieu filtrant, constitué d'un matériau contenant des fibres, qui est introduit sous forme de bande entre deux barres de gaufrage (11, 12); des arêtes pliées sont gaufrées dans le milieu filtrant, puis le milieu filtrant est transformé en un élément filtrant plié en accordéon qui est guidé entre deux courroies dentées (13, 14) et se rapproche d'une tête d'extrusion (15) de chacun des deux côtés de la bande filtrante, dans lequel, après le gaufrage, un filet de colle est appliqué sur les deux faces frontales du milieu filtrant avec une tête d'application de colle (16), filet qui, lors du pliage ultérieur, provoque un collage latéralement hermétique des plis, et dans lequel, avec les têtes d'extrusion (15), des cordons d'étanchéité sont appliqués directement sur le milieu filtrant des deux côtés de la bande filtrante, dans la zone marginale supérieure de la bande filtrante, cordons d'étanchéité qui refroidissent immédiatement après l'application et développent leurs propriétés élastiques, la liaison entre le milieu filtrant et le joint présentant une force de cohésion qui résiste à une contrainte de traction supérieure à 1 N/mm², le joint servant à séparer le côté amont du côté aval du filtre.

2. Procédé selon la revendication 1, **caractérisé en ce que**, pour appliquer le joint, plusieurs éléments filtrants sont d'abord fabriqués par un procédé continu, puis le joint est appliqué sur ces éléments et les éléments sont ensuite séparés.

3. Procédé selon la revendication 1, **caractérisé en ce que**, lors de l'application du joint, d'autres composants peuvent être intégrés dans le joint.
